# EUROPÄISCHE PATENTSCHRIFT

(11) **EP 2 343 514 B1**
(45) Veröffentlichungstag und Bekanntmachung des Hinweises auf die Patenterteilung: **24.04.2013**
(21) Anmeldenummer: 09180272.8
(22) Anmeldetag: 22.12.2009
(51) Int. Cl.: G01D 11/24

(54) **Einbauarmatur für einen stabförmigen Messeinsatz**
Mounting system for a rod-shaped probe
Armature d'installation pour une sonde en forme de barre

(43) Veröffentlichungstag der Anmeldung: 13.07.2011
(73) Patentinhaber: Endress+Hauser Wetzer GmbH+Co. KG, 87484 Nesselwang (DE)
(72) Erfinder: Pietroni, Michele, 20097, S.Donato (IT)
(74) Vertreter: Andres, Angelika Maria

(56) Entgegenhaltungen:
- DE-A1- 4 118 715
- US-A- 5 907 112
- US-A1- 2005 223 781

## Beschreibung

Die Erfindung bezieht sich auf eine Einbauarmatur.

Einbauarmaturen, wie bspw. ein Eintauchrohr, dienen gewöhnlich dazu, beim Herausziehen des Messeinsatzes zu Wartungs- oder Austauschzwecken ein Führungsrohr, in das der Messeinsatz eingebracht ist und damit eine Öffnung in einer Behälterwand zu verschließen.

In der industriellen Messtechnik ist es oftmals erforderlich Messeinsätze, die bspw. zur Aufnahme von Messgrößen wie Druck, Temperatur, Füllstand, Durchfluss, Trübung, Leitfähigkeit und pH-Wert dienen, zu reinigen oder zu erneuern. Dabei ist es je nach Einbauart des Messeinsatzes notwendig, den Prozess zu unterbrechen, d.h. einen Behälter drucklos zu machen und/oder zu entleeren. Solche Unterbrechungen sind natürlich nicht erwünscht. Vielmehr wird angestrebt den Prozess selbst im Falle eines Fehlers, wie bspw. einer Leckage der Einbauarmatur zumindest zeitweise fortzusetzen und damit die Funktionalität der Messeinrichtung zu gewährleisten.

So offenbart die Offenlegungsschrift US 4376227 eine schutzrohrartige Armatur, die starr in einem Behälter eingesetzt wird, und mittels einer Flanschverbindung an einen nach außen abgeschlossenen Schutzrohrkörper schließt. Als abdichtendes Element dient eine einzelne Flanschdichtung, die aber beim Öffnen unmittelbar das Behälterinnere offen legt.

Die Offenlegungsschrift US 4385197 stellt eine Anordnung von Thermoelementen vor, wobei eine randständige Fixierung innerhalb einer Schutzrohreinrichtung, einen guten thermischen Kontakt zum Messmedium gewährleisten soll und zu Austauschzwecken eine lösbare Service-freundliche Halterung bietet.

Weiterhin beschreibt die Offenlegungsschrift US 4410756 eine Vorrichtung, die einen guten thermischen Mediumskontakt und eine leichte Austauschbarkeit bieten soll, wobei thermischer Kontakt zum Schutzrohr mechanisch nur für die messfertige Sonde eingerichtet wird, ohne zusätzliche Sicherheitsvorkehrungen. Auch die US 4653935 offenbart eine Einkammer-Hochdruckausführung, ohne zusätzliche Sicherheitsvorkehrungen.

Die Offenlegungsschrift DE 2235676 offenbart ein nach außen ungeschütztes Dichtelement, wobei das Thermometerende an einem abzuschließenden Behälter direkt mit einer verschraubbaren Quetschdichtung zum Behälter abgedichtet wird, um bspw. einen Austausch zu Servicezwecken vorzunehmen.

Und die Offenlegungsschrift DE 41 18 715 A1 offenbart eine Vorrichtung zur elektrisch isolierten Befestigung einer metallischen Sondenelektrode in der Öffnung eines Behälters. Zwei rohrförmige Gehäuseteile, die jeweils eine Sicherheitskammer enthalten und gegeneinander abgedichtet sind, sind dabei auf der gleichen Seite eines Prozessanschlusses angeordnet.

Der Erfindung liegt daher die Aufgabe zugrunde, eine Einbauarmatur vorzuschlagen, die die Installation oder den Austausch eines Messeinsatzes auch während des laufenden Betriebs einer Anlage ermöglicht.

Die Aufgabe wird erfindungsgemäss durch eine Einbauarmatur mit einem Armaturengehäuse zur Aufnahme mindestens eines stabförmigen Messeinsatzes gelöst, wobei das Armaturengehäuse einen rohrförmigen ersten und zweiten Gehäuseteil, sowie einen Prozessanschluss aufweist, wobei zur Aufnahme des Messeinsatzes eine erste Sicherheitskammer in dem ersten Gehäuseteil und eine zweite Sicherheitskammer in dem zweiten Gehäuseteil vorgesehen ist, wobei das erste Gehäuseteil auf einer Seite des Prozessanschlusses angeordnet ist und wobei das erste Gehäuseteil einen Prozessanschluss aufweist und wobei das erste Gehäuseteil auf einer dem ersten Gehäuseteil gegenüberliegenden Seite des Prozessanschlusses mit dem zweiten Gehäuseteil verbunden ist, und wobei eine Abdichtungsvorrichtung vorgesehen ist, die bei in das Armaturengehäuse eingebrachtem Messeinsatz dazu dient, die zweite Sicherheitskammer gegenüber der ersten Sicherheitskammer, insbesondere druck- und/oder flüssigkeitsdicht, abzudichten.

Die erste Sicherheitskammer kann also von der zweiten Sicherheitskammer, bspw. im Fall einer Störung, abgeteilt und dadurch, insbesondere druck-und/oder flüssigkeitsdicht, abgedichtet werden. Daher kann die Sicherheit, bspw. gemäß den Anforderungen der funktionalen Sicherheit d.h. SIL oder ATEX, an der Messstelle gewährleistet werden, ohne dass der Prozess angehalten werden muss. Insbesondere kann so die Ausfallsicherheit eines Messgerätes, für das die Einbauarmatur verwendet wird, erhöht werden. Bspw. kann auf diese Weise die Messung im Fall einer Leckage des ersten Gehäuseteils fortgeführt werden. Die Abtrennung bzw. Abdichtung kann dabei entweder automatisch und/oder manuell durch Eingriff des Bedienpersonals erfolgen.

Die Abdichtungsvorrichtung kann also auch dann geschlossen und damit die erste Sicherheitskammer von der zweiten Sicherheitskammer abgeteilt werden, wenn der Messeinsatz sich teilweise in der ersten Sicherheitskammer befindet. Zur Aufnahme des Messeinsatzes kann die Abdichtungsvorrichtung bspw. eine Bohrung aufweisen, durch die hindurch der Messeinsatz in die erste Sicherheitskammer geführt ist. Mittels wenigstens eines Dichtmittels kann die Bohrung dann mitsamt dem durch die Bohrung geführten Teil des Messeinsatz geschlossen werden, so dass die erste Sicherheitskammer von der zweiten Sicherheitskammer getrennt und, insbesondere druck- und/oder flüssigkeitsdicht, abgedichtet ist. Sind mehrere Messeinsätze vorhanden, so können, diese bspw. gemeinsam durch eine Bohrung in der Abdichtungsvorrichtung oder jeweils durch eine Bohrung in der Abdichtungsvorrichtung geführt werden. Dichtmittel zum Schließen der Bohrung sind dann entsprechend vorzusehen.

Die erste Sicherheitskammer kann im Wesentlichen dazu dienen, den Messeinsatz vor einem Messstoff zu schützen, während die zweite Sicherheitskammer dazu dient, die Prozessumgebung vor einem allenfalls in die Einbauarmatur eingedrungenen Messstoff zu schützen. Die Abdichtungsvorrichtung zwischen der ersten und der zweiten Sicherheitskammer kann auf diese Art und Weise als zusätzliche Dichtstufe zwischen dem Messstoff und der Prozessumgebung, vor allem einer entfernten Warte, wirken.

Mit lediglich einer Sicherheitskammer, wie aus dem Stand der Technik bekannt, kann die Einhaltung einer Temperaturbegrenzung wie sie bspw. durch die ATEX Richtlinie T6 gefordert wird, nicht gewährleistet werden. Denn im Fall einer Leckage bspw. eines Schutzrohres, d.h. des ersten Gehäuseteils, würde der Messstoff die Sicherheitskammer füllen und evt. zu höheren Temperaturen als zulässig erhitzen. Durch die Abdichtungsvorrichtung und die zweite Sicherheitskammer kann ein eingedrungener Messstoff aber innerhalb der ersten Schutzkammer, d.h. innerhalb des Schutzrohres, gehalten werden, so dass der Messstoff nicht weiter als bis zum Prozessanschluss vordringen kann. Dadurch kann die Oberflächentemperatur am Ort der Einbauarmatur unterhalb des bspw. durch die ATEX Richtlinie T6 geforderten Grenzwertes gehalten werden. Es kann somit im Fall eines Fehlers, wie bspw. einer Leckage des ersten Gehäuseteils, dieselbe Sicherheitsstufe eingehalten werden, wie im fehlerfreien Fall.

Es sei auch erwähnt, dass neuerdings robuste Messeinsätze bekannt geworden sind, die selbst im Fall einer Leckage und daraufhin in die Schutzarmatur eintretendem evt. korrosivem Messstoff weiterhin funktionsfähig bleiben. Diese robusten Messeinsätze weisen bspw. eine zusätzlich Beschichtung bzw. Schicht auf, die deren Haltbarkeit verlängert. Zudem kann bei geschlossener Abdichtungsvorrichtung die Verschmutzung des Messstoffs aufgrund evt. zur Reinigung der zweiten Sicherheitskammer eingesetzter Reinigungsmittel verhindert werden.

In einer Ausgestaltung der Einbauarmatur dichtet die Abdichtungsvorrichtung die erste Sicherheitskammer von der zweiten Sicherheitskammer im Bereich des Prozessanschlusses ab. So kann vermieden werden, dass bspw. im Fall hoher Prozesstemperaturen ein ggf. in die Sicherheitskammer eingedrungener Messstoff die Einbauarmatur, insbesondere deren Oberfläche, oberhalb des Prozessanschlusses aufheizt.

In einer weiteren Ausgestaltung der Einbauarmatur ist die Abdichtungsvorrichtung, insbesondere unmittelbar, zwischen dem Prozessanschluss und dem zweiten Gehäuseteil bzw. der zweiten Sicherheitskammer angeordnet. Dadurch kann der Messstoff am Austreten aus dem, bspw. als Schutzarmatur dienenden, ersten Gehäuseteil gehindert werden und wie erwähnt, eine allfällige Erhitzung, insbesondere der Oberfläche der Einbauarmatur, verhindert werden.

In einer weiteren Ausgestaltung der Einbauarmatur weist das Armaturengehäuse einen mit dem zweiten Gehäuseteil verbundenen dritten Gehäuseteil auf, welcher dritte Gehäuseteil zur Aufnahme einer Mess-und/oder Betriebselektronik dient. Der dritte Gehäuseteil kann bspw. ein Messumformergehäuse sein und durch eine weitere Dichtstufe von der zweiten Sicherheitskammer getrennt sein. Folglich kann ein ggf. in die zweite Sicherheitskammer eingedrungener Messstoff nicht ohne weiteres aus der Einbauarmatur austreten oder durch ein an das dritte Gehäuseteil angeschlossenes Rohrleitungssystem bis in eine Warte gelangen. Durch das Schließen der Abdichtungsvorrichtung liegt dann selbst im Fall einer Leckage des ersten Gehäuseteils eine zweifache Dichtungsstufe zwischen dem Dritten Gehäuseteil und/oder einer Warte und dem sich im Prozess befindlichen Messstoff. So dass auch im Fall eines Fehlers das mit der Einbauarmatur verwendete Messgerät weiter sicher betrieben werden kann.

In einer weiteren Ausgestaltung der Einbauarmatur sind wenigstens das erste, zweite und dritte Gehäuseteil miteinander verbindbar und das Armaturengehäuse ist modular im Wesentlichen aus den drei Gehäuseteilen zusammengesetzt. Die Gehäuseteile der Einbauarmatur können bspw. über eine Schraubverbindung miteinander verbunden sein. So kann der zweite Gehäuseteil an den bspw. als Flansch ausgestalteten Prozessanschluss des ersten Gehäuseteils angeschraubt werden. Alternativ ist es auch denkbar, dass die Einbauarmatur teilweise einstückig ist, d.h. dass wenigstens der erste und der zweite und/oder der dritte Gehäuseteils eine Einheit bilden und also insbesondere stoffschlüssig miteinander verbunden sind.

In einer weiteren Ausgestaltung der Einbauarmatur ist der erste Gehäuseteil mittels des Prozessanschlusses an eine Öffnung eines Behälters angebracht und ragt in den Behälter hinein. In einer weiteren Ausgestaltung der Einbauarmatur ist der erste Gehäuseteil während eines Messbetriebs umgebungsseitig einem Messstoff ausgesetzt. In einer weiteren Ausgestaltung der Einbauarmatur schließt sich der zweite Gehäuseteil außerhalb des Behälters an den ersten Gehäuseteil an. Durch die Trennung in einerseits den dem Messstoff innerhalb des Behälters ausgesetzten ersten Gehäuseteil und andererseits dem außerhalb des Behälters angeordnetem zweiten Gehäuseteil und der dazwischen angeordneten Abdichtungsvorrichtung kann eine vorteilhafte Wirkung hinsichtlich der Zuverlässigkeit der Einbauarmatur erreicht werden.

In einer weiteren Ausgestaltung der Einbauarmatur dient die Abdichtungsvorrichtung dazu, im Fall einer Leckage des ersten Gehäuseteils den zweiten Gehäuseteil von dem ersten Gehäuseteil, insbesondere druck-und/oder flüssigkeitsdicht, abzudichten, ohne den Messbetrieb zu unterbrechen. Der Messeinsatz verbleibt dabei innerhalb der Einbauarmatur, insbesondere verbleibt der Messeinsatz in einer im Vergleich zum fehlerfreien Messbetrieb unveränderten Anordnung innerhalb der Einbauarmatur. Der Messeinsatz kann daher sowohl bei geöffnetem als auch bei geschlossener Abdichtvorrichtung in die erste Sicherheitskammer als auch in die zweite Sicherheitskammer angeordnet sein. Der Messeinsatz der wenigstens teilweise in der ersten und zweiten Sicherheitskammer angeordnet ist, sollte, um den Messbetrieb fortsetzen zu können, daher beim Abdichten nicht beschädigt werden. Wie erwähnt, kann zum Abtrennen der Sicherheitskammern ein Dichtmittel vorgesehen sein und dazu verwendet werden, um bspw. die Bohrung der Abdichtungsvorrichtung, durch die der Messeinsatz geführt ist, zu schließen. Der Messbetrieb des Messgerätes, welches die Einbauarmatur verwendet, kann also fortgesetzt werden, da der Messeinsatz bspw. wie bei der Temperaturmessung nach wie vor in thermischem Kontakt mit dem Messstoff steht.

In einer weiteren Ausgestaltung der Einbauarmatur besteht die Abdichtungsvorrichtung aus einem Dichtungsaufsatz, der an den ersten Gehäuseteil anschließbar ist. Das zweite Gehäuseteil kann bspw. eine Ausnehmung aufweisen, in welcher der Dichtungsaufsatz aufgenommen wird. Der Dichtungsaufsatz kann dann bspw. durch Befestigen des zweiten Gehäuseteils an dem ersten Gehäuseteil kraftschlüssig und/oder formschlüssig und insbesondere druck-, gas und/oder flüssigkeitsdicht, mit dem ersten Gehäuseteil verbunden werden. Alternativ kann der Dichtungsaufsatz, ebenso wie die gesamte Abdichtungsvorrichtung in das zweite Gehäuseteil integriert bzw. eingebracht sein. Insbesondere kann der Dichtungsaufsatz als Verbindung zwischen der in dem ersten Gehäuseteil befindlichen ersten Sicherheitskammer und der in dem zweiten Gehäuseteil befindlichen zweiten Sicherheitskammer dienen.

In einer weiteren Ausgestaltung der Einbauarmatur weist der Dichtungsaufsatz weiterhin wenigstens eine Bohrung auf, die zur Aufnahme bzw. Durchführung des wenigstens einen Messeinsatzes dient. Im montierten Zustand ist der Messeinsatz dann bspw. durch die Abdichtungsvorrichtung hindurch geführt. Insbesondere kann der Messeinsatz durch eine in der Abdichtungsvorrichtung, insbesondere dem Dichtungsaufsatz, vorgesehene Bohrung geführt sein. Durch die in der Abdichtungsvorrichtung vorgesehene Bohrung zur Aufnahme des Messeinsatzes können die erste und die zweite Sicherheitskammer miteinander verbunden sein. Durch Schließen der Abdichtungsvorrichtung kann diese Verbindung dann getrennt werden, und die erste Sicherheitskammer von der zweiten Sicherheitskammer abgeteilt werden. Die Dichtstufe kann dabei flüssigkeitsdicht und/oder druckdicht oder auch gasdicht ausgeführt werden.

In einer weiteren Ausgestaltung der Einbauarmatur dient die Bohrung zur Aufnahme des Messeinsatzes auch zur Aufnahme einer, insbesondere im Wesentlichen aus Graphit bestehenden, Hülse, welche Hülse wiederum zur Aufnahme des mindestens einen Messeinsatzes dient. Die Hülse umschließt dabei den Messeinsatz im Bereich der Bohrung wenigstens abschnittsweise entlang der Längsachse des Messeinsatzes. Die Hülsen können wie im Folgenden erläutert, als Dichtmittel beim Verschließen der Bohrung dienen.

In einer Ausgestaltung der Einbauarmatur sind weiterhin Andruckhülsen an dem Dichtungsaufsatz vorgesehen, die dazu dienen, eine Verpressung der Hülsen zu bewirken und dadurch die erste Sicherheitskammer gegenüber der zweiten Sicherheitskammer, insbesondere druck- und/oder flüssigkeitsdicht, abzudichten. Bei den Andruckhülsen kann es sich bspw. um mittels einer Bohrung gefertigte Anschläge für die Hülse um den Messeinsatz handeln. Wird die den Messeinsatz umgebende Hülse gegen die Andruckhülse gepresst, so kann sich die Hülse verformen. Die Verformung der Hülse kann dazu genutzt werden, einen zwischen Messeinsatz und Wandung der Bohrung bestehenden Zwischenraum, mit dem Material aus dem die Hülse besteht, zu füllen. Es hat sich als vorteilhaft erwiesen als Material für die Hülsen Graphit zu verwenden, da dieses weich ist und daher mittels verpressen umgeformt werden kann und andererseits hitzebeständig ist. Natürlich können auch andere Materialien mit ähnlichen Eigenschaften, wie bspw. Molybdänit, verwendet werden.

In einer weiteren Ausgestaltung der Einbauarmatur weist der Dichtungsaufsatz eine Bohrung zur Aufnahme eines Druckkolbens auf, welcher Druckkolben die Verpressung der Hülse bewirkt. Der Druckkolben kann eine auf ihn übertragene Kraft wiederum auf die Hülse übertragen und diese gegen die Andruckhülse pressen, so dass sich die Hülse um den Messeinsatz verformt und damit die Bohrung abdichtet, indem die verformte Hülse die Bohrung wenigstens teilweise ausfüllt. Der Druckkolben kann bspw. eine Kraft in longitudinaler Richtung der Hülse übertragen, so dass die Hülse bei einer Kraft, die die Steifigkeit in Longitudinalrichtung der Hülse überschreitet, beginnt sich zu verformen.

In einer weiteren Ausgestaltung der Einbauarmatur dichtet in dem Fall einer Leckage des ersten Gehäuseteils, die Abdichtungsvorrichtung automatisch den ersten Gehäuseteil gegenüber dem zweiten Gehäuseteil, insbesondere druck- und/oder flüssigkeitsdicht, ab. Dafür kann bspw. ein pneumatischer Aktor vorgesehen sein. Dafür kann ein Überwachungsanschluss vorgesehen sein, dessen Signalausgang beim überschreiten eines Grenzbetriebsdrucks bspw. ein Stellglied schaltet, das bspw. mittels hydraulischen oder pneumatischen Aktoren das schließen der Abdichtungsvorrichtung bewirkt.

In einer weiteren Ausgestaltung der Einbauarmatur wird der Druckkolben über den im Leckagefall sich aufbauenden Druck aus der ersten Sicherheitskammer über die durch den Prozessanschluss geführte Druckleitung mit dem über den Messstoff vermittelten Prozessdruck betätigt, woraus eine intrinsische Schließfunktion resultiert.

In einer weiteren Ausgestaltung wird in dem Fall einer Leckage des ersten Gehäuseteils, die Abdichtungsvorrichtung vorgehalten, die den ersten Gehäuseteil gegenüber dem zweiten Gehäuseteil, insbesondere druck-und/oder flüssigkeitsdicht, selbsttätig abdichtet.

In einer weiteren Ausgestaltung wird im Falle der unvollständigen oder gänzlich ausfallenden Wirkung der selbsttätigen Abdichtungsvorrichtung zusätzlich an einen Überwachungsanschluss eine Drucküberwachungseinheit angeschlossen, deren Signalausgang beim Überschreiten eines Grenzbetriebsdruckes ein Stellglied schaltet, das mittels hydraulischer oder pneumatischer Aktoren, die Schließung der ersten Sicherheitskammer gegenüber der zweiten Sicherheitskammer bewirkt.

Die Erfindung wird anhand der nachfolgenden Zeichnungen näher erläutert. Es zeigt:
Fig. 1: einen Schnitt durch die Längsachse einer Einbauarmatur mit mehreren stabförmigen Messeinsätzen,
Fig. 2: .einen Schnitt durch die Längsachse der Einbauarmatur auf Höhe der Abdichtvorrichtung,
Fig. 3: einen weiteren Schnitt durch die Längsachse der Einbauarmatur auf Höhe der Abdichtvorrichtung, jedoch um eine gegenüber Figur 2, um einen Drehwinkel um die Längsachse, versetzte Ebene, und
Fig. 4: einen Schnitt durch eine installierte Einbauarmatur a) im fehlerfreien Betriebszustand, b) im Fall einer Leckage und befüllter erster Sicherheitskammer, c) im Fall einer Leckage und befüllter erster und zweiter Sicherheitskammer.

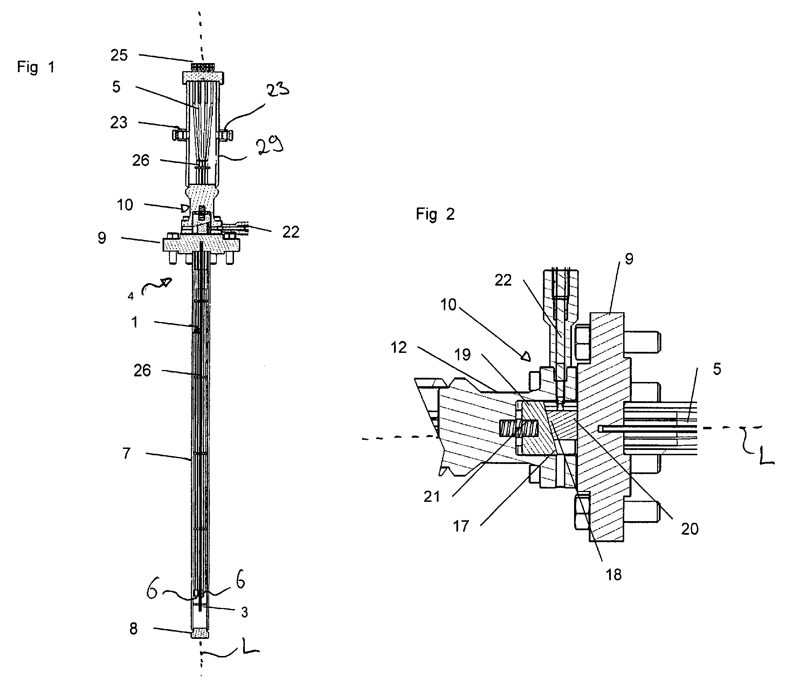

Figur 1 zeigt einen Schnitt durch die Längsachse L der Einbauarmatur 4. Die Einbauarmatur 4 besteht dabei aus einem Eintauchrohr 7, das im eingebauten Zustand wenigstens teilweise einem Messstoff 27 ausgesetzt ist und als Schutzarmatur gegen den Messstoff 27 dient. Das Eintauchrohr 7 bildet einen ersten Gehäuseteil der Einbauarmatur 4. An einem Ende dieses Eintauchrohrs 7 ist ein Prozessanschluss 9 in Form eines Einbauflanschs vorhanden, der zum Befestigen der Einbauarmatur 4 an der Wandung eines Behälters B in dem sich der Messstoff 27 befindet dient. Oberhalb des Prozessanschlusses 9, d.h. auf der dem Eintauchrohr 7 gegenüberliegenden Seite des Prozessanschlusses 9, ist eine Abdichtungsvorrichtung 10 angeordnet und mit dem Eintauchrohr 7 verbunden. Die Abdichtvorrichtung 10 wird von einem zweiten Gehäuseteil 29 aufgenommen, dass ebenfalls oberhalb, d.h. auf der dem Eintauchrohr 7 gegenüberliegenden Seite des Prozessanschlusses 9, des Eintauchrohrs 7 angeordnet ist. Der zweite Gehäuseteil 29 ist hier über eine Klemmverschraubung 25 mit dem dritten Gehäuseteil, in Figur 1 nicht gezeigt, verbunden. Innerhalb des ersten Gehäuseteils, d.h. dem Eintauchrohr 7, und des zweiten Gehäuseteils 29 sind mehrere Messeinsätze 5 angeordnet. Diese Messeinsätze 5 können bspw. zur Aufnahme der Temperatur, insbesondere an mehreren Punkten des ersten Gehäuseteils 7, eines Messstoffs dienen. Dafür können bspw. Temperaturfühler 6 vorgesehen sein.

Das Eintauchrohr 7 schließt an einem Ende mit dem Prozessanschluss 9 ab. Das Eintauchrohr 7 ist an dem dem Prozessanschluss 9 gegenüberliegenden, Ende mit einer Stopfbusche 8 verschlossen. An dem mit der Stopfbusche 8 verschlossenen Ende der Einbauarmatur 4 ist ein Druckrohr 3 vorgesehen, welches einen an dem Ende auftretenden Druck aufnimmt und bis zur Abdichtungsvorrichtung 10 bzw. dem Prozessanschluss 9 führt. Das Eintauchrohr 7 bildet eine erste Sicherheitskammer 1, d.h. umschliesst einen Hohlraum in dem die Messeinsätze 5 angeordnet sind. Zur Ausrichtung der Messeinsätze 5 sind in der ersten Sicherheitskammer 1 auch Klemmhalterungen 26 vorgesehen.

Auf der der dem Eintauchrohr 7 gegenüberliegenden Seite des Prozessanschlusses 9 ist zwischen dem Prozessanschluss 9 und der zweiten Sicherheitskammer 2 die Abdichtvorrichtung 10 angeordnet. Im fehlerfreien Messbetrieb sind die erste und die zweite Sicherheitskammer 1, 2 bspw. über die Abdichtungsvorrichtung 10 miteinander verbunden.

Innerhalb der zweiten Sicherheitskammer 2 sind die Messeinsätze 5 ebenfalls mittels Klemmhalterungen 26 positioniert. Zudem weist der zweite Gehäuseteil Überwachungsanschlüsse 26 auf, mittels denen die zweite Sicherheitskammer 2 auf eintretenden Messstoff überwacht werden kann. Bei den Überwachungsanschlüssen 23 kann es sich bspw. auch um Ventile handeln. Zudem können die Überwachungsanschlüsse 23 auch zum Spülen, d.h. Reinigen der zweiten Sicherheitskammer 2 dienen.

Figur 2 zeigt einen Schnitt durch die Längsachse L der Einbauarmatur 4 auf Höhe der Abdichtungsvorrichtung 10. Die vorliegende Ausgestaltung der Abdichtungsvorrichtung 10 wird im Folgenden näher beschrieben.

Die Abdichtungsvorrichtung 10 ist unmittelbar zwischen dem Prozessanschluss 9, der an dem Eintauchrohr 7 befestigt ist und dem zweiten Gehäuseteil 29 angeordnet. Die Messeinsätze 5 werden dabei durch die Abdichtungsvorrichtung 10 hindurch geführt. Die Abdichtungsvorrichtung 10 dient dabei dazu, die erste Sicherheitskammer 1 von der zweiten Sicherheitskammer 2 zu trennen. Dafür kann eine Druckstange 22 vorgesehen sein, mittels der ein keilförmiger Körper 20 einen Vortrieb erfährt, so dass der keilförmige Körper 20 mit einer Andruckseite 18 gegen einen Druckkolben 19 wirkt. Durch den Druckkolben 19, der insbesondere eine prismatische Form aufweist, werden die die Messeinsätze 5 umgebenden Graphithülsen 14 gegen Andruckhülsen 15 gepresst, so dass durch die Verformung der Hülsen 14 die Bohrung 13 durch die jeweils einer der Messeinsätze 5 geführt ist verschlossen und auch abgedichtet wird.

Zum Vorspannen des Druckkolbens 19 kann bspw. eine Feder 21 vorgesehen sein, die zwischen dem Druckkolben 19 und einer Wandung des zweiten Gehäuseteils 29 angeordnet ist und für die nötige Vorspannung sorgt.

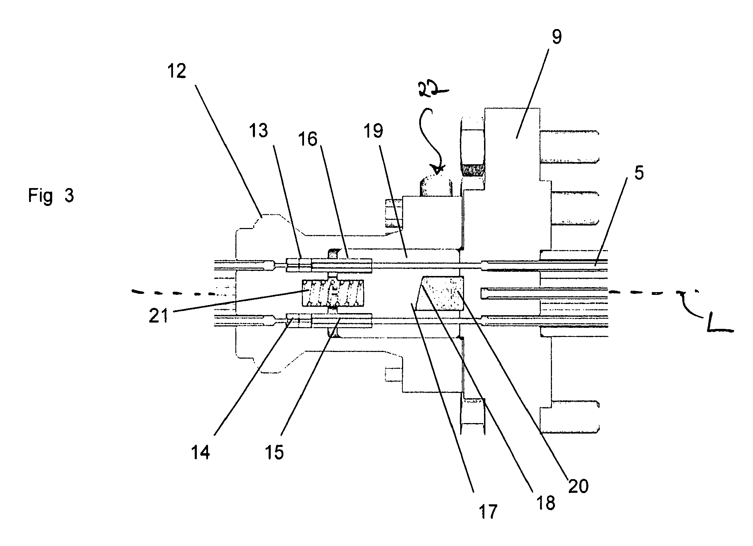

Andererseits kann die Abdichtungsvorrichtung durch den über das Druckaufnahmerohr 3 übertragenen Druck verschlossen werden. Dafür kann ein in Figur 2, und Figur 3 nicht gezeigter Kanal vorgesehen sein, der den Druck von dem Druckaufnahmerohr 3 durch den Prozessanschluss 9 auf den keilförmigen Körper 20 überträgt und dadurch zur Verpressung der Hülsen 14 führt.

Figur 3 zeigt nochmals einen Schnitt durch die Längsachse L der Einbauarmatur 4 auf Höhe der Abdichtungsvorrichtung 10. In Figur 3 sind die Hülsen 14 die jeweils einen der Messeinsätze 5 umgeben und die Andruckhülsen 15 der Abdichtungsvorrichtung 10 gezeigt.

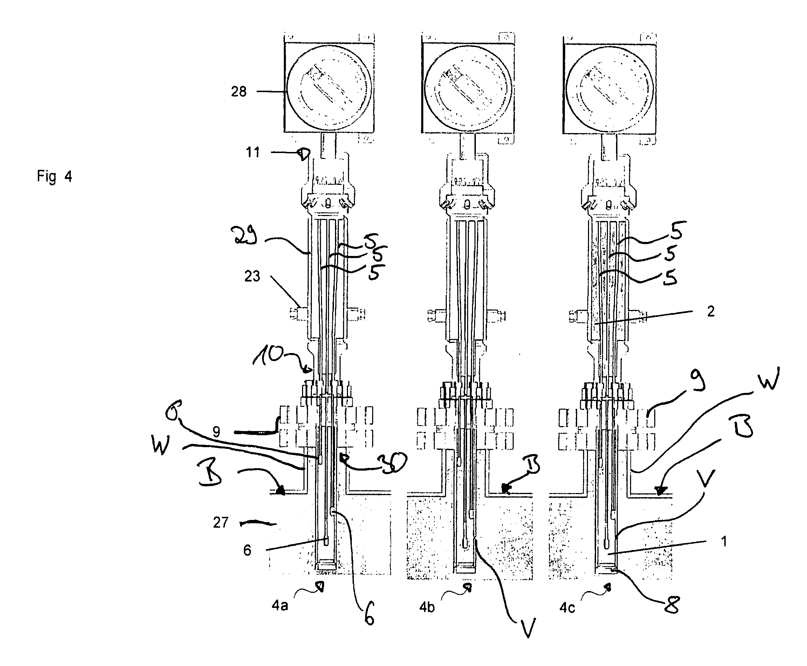

Figur 4 zeigt ebenfalls einen Schnitt durch die Längsachse L einer installierten Einbauarmatur a) im fehlerfreien Betriebszustand, b) im Fall einer Leckage V und befüllter erster Sicherheitskammer, c) im Fall einer Leckage V und befüllter erster und zweiter Sicherheitskammer 1, 2. Die Funktionsweise der Einbauarmatur 4 soll anhand der in Figur 4 gezeigten Zustände nochmals verdeutlicht werden.

In Figur 4a) ist die Einbauarmatur 4 im fehlerfreien Zustand gezeigt. Der erste Gehäuseteil der Einbauarmatur 4, d.h. das Eintauchrohr 7, ist an eine Öffnung 20 einer Wandung W des Behälters B mittels des Prozessanschlusses 9 angebracht. Außerhalb des Behälters B ist der zweite Gehäusekörper 29 mit einem Ende an den Prozessanschluss 9 des Eintauchrohrs 7 angeschlossen, während an das gegenüberliegende Ende ein dritter Gehäuseteil, nämlich das Messumformergehäuse 28 angeschlossen ist. Das Messumformergehäuse 28 ist dabei über einen sog. Armaturenkopf 11 mit dem zweiten Gehäuseteil 29 verbunden. Dabei ist die erste und die zweite Sicherheitskammer 1, 2 in Figur 4 a) frei von dem Messstoff.

Figur 4b) zeigt den Fall, dass durch eine Beschädigung, in diesem Fall eine Leckage V, des ersten Gehäuseteils, d.h. des Eintauchrohrs 7, Messstoff 27 in die erste Sicherheitskammer 1 eingedrungen ist.

In Figur 4c) füllt der durch das Leck V eingedrungene Messstoff 27 die erste und die zweite Sicherheitskammer 1, 2 vollständig aus.

Die Abdichtungsvorrichtung 10 der vorgeschlagenen Einbauarmatur 4 kann dazu verwendet werden, die Einbauarmatur auf der Höhe des Prozessanschlusses 9 zu verschließen und abzudichten. Dadurch kann ein eventuell in die Einbauarmatur 4 eingedrungener Messstoff 27 innerhalb des Behälters B gehalten werden und somit das Aufheizen der Oberfläche der Einbauarmatur 4 vermieden werden.

Die in Figur 4 gezeigte Einbauarmatur 4 kann auch dazu verwendet werden, die Messeinsätze 5 bei laufendem Prozess auszutauschen. Zu diesem Zweck werden die Messeinsätze 5 zuerst aus der ersten Sicherheitskammer 1 in die zweite Sicherheitskammer 2 gezogen. Sodann kann die Abdichtungsvorrichtung 10 geschlossen werden. Die zweite Sicherheitskammer 2 kann dann von dem Messstoff 27 befreit werden, indem sie bspw. gespült wird. Die Messeinsätze 5 können sodann getauscht werden. Anschliessend kann die Abdichtvorrichtung 10 wieder geöffnet und die Messeinsätze 5 wieder in die erste Sicherheitskammer 1 eingebracht werden.

### Bezugszeichenliste

- 1: Erste Sicherheitskammer
- 2: Zweite Sicherheitskammer
- 3: Druckaufnahmerohr
- 4: Einbauarmatur
- 5: Messeinsatz
- 6: Temperatursensorelement
- 7: Eintauchrohr
- 8: Stopfbusche
- 9: Prozessanschluss
- 10: Abdichtungsvorrichtung
- 11: Armaturenkopf
- 12: Dichtungsaufsatz
- 13: Bohrung in den Dichtungsaufsatz zur Aufnahme der Hülsen
- 14: Hülse
- 15: Andruckhülse
- 16: Bohrung in den Dichtungsaufsatz zur Aufnahme des Druckkolbens
- 17:
- 18: Andruckseite
- 19: Druckkolben
- 20: Prismatischer Keilkörper
- 21: Feder
- 22: Druckstange
- 23: Überwachungsanschluss
- 24: Überwurfteil
- 25: Klemmverschraubung
- 26: Klemmhalterung
- 27: Messstoff
- 28: Umformergehäuse
- 29: Zweiter Gehäuseteil
- 30: Öffnung in der Behälterwand
- B: Behälter
- L: Längsachse der Einbauarmatur
- V: Leckage
- W: Wandung des Behälters

## Patentansprüche

1. Einbauarmatur (4) mit einem Armaturengehäuse (7, 29, 28) zur Aufnahme mindestens eines stabförmigen Messeinsatzes (5),
wobei das Armaturengehäuse (7, 29, 28) einen rohrförmigen ersten und zweiten Gehäuseteil (7, 29), sowie einen Prozessanschluss (9) aufweist,
wobei zur Aufnahme des Messeinsatzes (5) eine erste Sicherheitskammer (1) in dem ersten Gehäuseteil (7) und eine zweite Sicherheitskammer (2) in dem zweiten Gehäuseteil (29) vorgesehen ist,
wobei das erste Gehäuseteil (7) auf einer Seite des Prozessanschlusses (9) angeordnet ist und
wobei das erste Gehäuseteil (7) auf einer dem ersten Gehäuseteil (7) gegenüberliegenden Seite des Prozessanschlusses (9) mit dem zweiten Gehäuseteil (29) verbunden ist, und
wobei eine Abdichtungsvorrichtung (10) vorgesehen ist, die bei in das Armaturengehäuse (7, 29, 28) eingebrachtem Messeinsatz (5) dazu dient, die zweite Sicherheitskammer (2) gegenüber der ersten Sicherheitskammer (1), insbesondere druck- und/oder flüssigkeitsdicht, abzudichten.

2. Einbauarmatur (4) nach Anspruch 1,
wobei die Abdichtungsvorrichtung (10) die erste Sicherheitskammer (1) von der zweiten Sicherheitskammer (2) im Bereich des Prozessanschlusses (9) abdichtet.

3. Einbauarmatur (4) nach Anspruch 1 oder 2,
wobei die Abdichtungsvorrichtung (10), insbesondere unmittelbar, zwischen dem Prozessanschluss (9) und dem zweiten Gehäuseteil (29) bzw. der zweiten Sicherheitskammer (2) angeordnet ist.

4. Einbauarmatur (4) nach wenigstens einem der vorherigen Ansprüche,
wobei das Armaturengehäuse (7, 29, 28) einen mit dem zweiten Gehäuseteil (29) verbundenen dritten Gehäuseteil (28) aufweist, welcher zur Aufnahme einer Mess- und/oder Betriebselektronik dient.

5. Einbauarmatur (10) nach Anspruch 4,
wobei wenigstens das erste, zweite und dritte Gehäuseteil (7, 29, 28) miteinander verbindbar sind und das Armaturengehäuse (7, 29, 28) modular im Wesentlichen aus den drei Gehäuseteilen (7, 29, 28) zusammengesetzt ist.

6. Einbauarmatur (10) nach wenigstens einem der vorherigen Ansprüche,
wobei der erste Gehäuseteil (7) mittels des Prozessanschlusses (9) an eine Öffnung (30) eines Behälters (B) anbringbar ist und im eingebauten Zustand in den Behälter (B) hineinragt.

7. Einbauarmatur (10) nach wenigstens einem der vorherigen Ansprüche,
wobei der erste Gehäuseteil (7) im eingebauten Zustand dazu dient, während eines Messbetriebs umgebungsseitig einem Messstoff (27) ausgesetzt zu werden.

8. Einbauarmatur (10) nach wenigstens einem der vorherigen Ansprüche,
wobei sich der zweite Gehäuseteil (29) im eingebauten Zustand außerhalb des Behälters (B) an den ersten Gehäuseteil (7) anschließt.

9. Einbauarmatur (10) nach wenigstens einem der vorherigen Ansprüche,
wobei die Abdichtungsvorrichtung (10) dazu dient, im Fall einer Leckage (V) des ersten Gehäuseteils (7) den zweiten Gehäuseteil (29) von dem ersten Gehäuseteil (7), insbesondere druck- und/oder flüssigkeitsdicht, abzudichten, ohne den Messbetrieb zu unterbrechen.

10. Einbauarmatur (10) nach wenigstens einem der vorherigen Ansprüche,
wobei die Abdichtungsvorrichtung (10) aus einem Dichtungsaufsatz (12) besteht, der an den ersten Gehäuseteil (7) anschließbar ist.

11. Einbauarmatur (10) nach Anspruch 10, wobei der Dichtungsaufsatz (12) weiterhin wenigstens eine Bohrung (13, 16) aufweist, die zur Aufnahme bzw. Durchführung des wenigstens einen Messeinsatzes (5) dient.

12. Einbauarmatur (10) nach Anspruch 11, wobei die Bohrung (13, 16) zur Aufnahme des Messeinsatzes (5) auch zur Aufnahme einer, insbesondere im Wesentlichen aus Graphit bestehenden, Hülse (14) dient, welche Hülse (14) wiederum zur Aufnahme des mindestens einen Messeinsatzes (5) dient.

13. Einbauarmatur (10) nach wenigstens einem der Ansprüche 10 bis 12, wobei weiterhin eine Andruckhülse (15) an dem Dichtungsaufsatz (12) vorgesehen ist, die dazu dient, eine Verpressung der Hülse (14) zu bewirken und dadurch die erste Sicherheitskammer (1) gegenüber der zweiten Sicherheitskammer (2), insbesondere druck- und/oder flüssigkeitsdicht, abzudichten.

14. Einbauarmatur (10) nach wenigstens einem der Ansprüche 10 bis 13, wobei der Dichtungsaufsatz (12) eine Bohrung (13, 16) zur Aufnahme eines Druckkolbens (19) aufweist, welcher Druckkolben (19) die Verpressung der Hülse (14) bewirkt.

15. Einbauarmatur (10) nach wenigstens einem der vorherigen Ansprüche, wobei in dem Fall einer Leckage (V) des ersten Gehäuseteils (7), die Abdichtungsvorrichtung (10) automatisch den ersten Gehäuseteil (7) gegenüber dem zweiten Gehäuseteil (29), insbesondere druck- und/oder flüssigkeitsdicht, abdichtet.

## Claims

1. Installation assembly (4) with an assembly housing (7, 29, 28) for holding at least one rod-shaped insert (5),
wherein the assembly housing (7, 29, 28) has a pipe-shaped first and second housing part (7, 29) and a process connection (9),
wherein, for the purpose of holding the insert (5), a first safety chamber (1) is provided in the first housing part (7) and a second safety chamber (2) is provided in the second housing part (29),
wherein the first housing part (7) is arranged on a side of the process connection (9) and wherein the first housing part (7) is connected to the second housing part (29) on a side of the process connection (9) that is opposite the first housing part (7) and,
wherein a sealing unit (10) is provided which, when the insert (5) is inserted into the assembly housing (7, 29, 28), serves to seal off the second safety chamber (2) from the first safety chamber (1), particularly in such a way that is pressure-tight and liquid-tight.

2. Installation assembly (4) as claimed in Claim 1,
wherein the sealing unit (10) seals off the first safety chamber (1) from the second safety chamber (2) in the area of the process connection (9).

3. Installation assembly (4) as claimed in Claim 1 or 2,
wherein the sealing unit (10) is arranged, particularly directly, between the process connection (9) and the second housing part (29) and/or the second safety chamber (2).

4. Installation assembly (4) as claimed in at least one of the previous claims, wherein the assembly housing (7, 29, 28) has a third housing part (28) that is connected to the second housing part (29) and serves to hold measuring and/or operating electronics.

5. Installation assembly (10) as claimed in Claim 4,
wherein at least the first, second and third housing part (7, 29, 28) can be connected to one another, and the assembly housing (7, 29, 28) is essentially comprised of the three housing parts (7, 29, 28) in a modular fashion.

6. Installation assembly (10) as claimed in at least one of the previous claims,
wherein the first housing part (7) can be fitted on an opening (30) of a container (B) via the process connection (9) and projects into the container (B) when installed.

7. Installation assembly (10) as claimed in at least one of the previous claims,
wherein the first housing part (7), when it is installed, serves to be exposed to a fluid (27) on the ambient side during measuring operation.

8. Installation assembly (10) as claimed in at least one of the previous claims,
wherein the second housing part (29) follows on from the first housing part (7) in an installed state outside the container (B).

9. Installation assembly (10) as claimed in at least one of the previous claims,
wherein - in the event of a leak (V) in the first housing part (7) - the purpose of the sealing unit (10) is to seal off the second housing part (29) from the first housing part (7), particularly in such a way that is pressure-tight and liquid-tight, without interrupting measuring operation.

10. Installation assembly (10) as claimed in at least one of the previous claims,
wherein the sealing unit (10) consists of a seal fixture (12), which can be connected to the first housing part (7).

11. Installation assembly (10) as claimed in Claim 10,
wherein the seal fixture (12) further has at least one borehole (13, 16) which is used to hold or guide the one insert (5) at least.

12. Installation assembly (10) as claimed in Claim 11,
wherein the borehole (13, 16) for holding the insert (5) also serves to hold a sleeve (14), particularly a sleeve primarily consisting of graphite, said sleeve in turn serving to hold the one insert (5) at least.

13. Installation assembly (10) as claimed in at least one of the Claims 10 to 12,
wherein furthermore a pressure sleeve (15) is provided on the seal fixture (12) which is used to put pressure on the sleeve (14) and thereby seal off the first safety chamber (1) from the second safety chamber (2), particularly in such a way that is pressure-tight and liquid-tight.

14. Installation assembly (10) as claimed in at least one of the Claims 10 to 13,
wherein the seal fixture (12) has a borehole (13, 16) to hold a pressure piston (19), said pressure piston (19) causing the sleeve (14) to be pressed.

15. Installation assembly (10) as claimed in at least one of the previous claims,
wherein, in the event of a leak (V) in the first housing part (7), the sealing unit (10) automatically seals off the first housing part (7) from the second housing part (29), particularly in such a way that is pressure-tight and liquid-tight.

## Revendications

1. Sonde intégrée (4) avec un boîtier de sonde (7, 29, 28) pour la réception d'au moins un insert de mesure en forme de tige (5), **caractérisée en ce que** le boîtier de sonde (7, 29, 28) présente une première et une deuxième partie de boîtier tubulaires (7, 29), ainsi qu'un raccord process (9), **caractérisée en ce qu'**une première chambre de sécurité (1) est prévue dans la première partie du boîtier (7) et une deuxième chambre de sécurité (2) dans la deuxième partie du boîtier (29) pour le logement de l'insert de mesure (5), **caractérisée en ce que** la première partie du boîtier (7) est disposée sur un côté du raccord process (9) et, **caractérisée en ce que** la première partie du boîtier (7) est reliée avec la deuxième partie du boîtier (29) sur un côté du raccord process (9) opposé à la première partie du boîtier (7), **caractérisée en ce qu'**un dispositif d'étanchéité (10) est prévu, qui, lorsque l'insert de mesure (5) est monté dans le boîtier de sonde (7, 29, 28), assure l'étanchéité, notamment à la pression et aux liquides, de la deuxième partie du boîtier (2) par rapport à la première partie du boîtier (7).

2. Sonde intégrée (4) selon la revendication 1, **caractérisée en ce que** le dispositif d'étanchéité (10) assure l'étanchéité entre la première chambre de sécurité (1) et la deuxième chambre de sécurité (2) dans la zone du raccord process (9).

3. Sonde intégrée (4) selon la revendication 1 ou 2, **caractérisée en ce que** le dispositif d'étanchéité (10) est disposé directement entre le raccord process (9) et la deuxième partie du boîtier (29) ou la deuxième chambre de sécurité (2).

4. Sonde intégrée (4) selon au moins l'une des revendications précédentes, **caractérisée en ce que** le boîtier de sonde (7, 29, 28) présente une troisième partie de boîtier (28) reliée à la deuxième partie du boîtier (29), servant de logement pour une électronique de mesure et/ou électronique d'exploitation.

5. Sonde intégrée (4) selon la revendication 4, **caractérisée en ce qu'**au moins la première, la deuxième et la troisième partie du boîtier (7, 29, 28) sont reliables entre elles, et que le boîtier de sonde (7, 29, 28) est composé de façon modulaire pour l'essentiel à partir des trois parties du boîtier (7, 29, 28).

6. Sonde intégrée (4) selon au moins l'une des revendications précédentes, **caractérisée en ce que** la première partie du boîtier (7) peut être fixée au moyen du raccord process (9) à une ouverture (30) d'un récipient (B) et dépasse à l'intérieur du récipient (B) à l'état monté.

7. Sonde intégrée (4) selon au moins l'une des revendications précédentes, **caractérisée en ce que** la première partie du boîtier (7), à l'état monté, est exposée à un produit de mesure (27) côté environnement pendant une exploitation de mesure.

8. Sonde intégrée (4) selon au moins l'une des revendications précédentes, **caractérisée en ce que** la deuxième partie du boîtier (29), à l'état monté, est reliée à la première partie du boîtier (7) à l'extérieur du récipient (B).

9. Sonde intégrée (4) selon au moins l'une des revendications précédentes, **caractérisée en ce que** le dispositif d'étanchéité (10), en cas d'une fuite (V) au niveau de la première partie du boîtier (7), assure l'étanchéité de la deuxième partie du boîtier (29) par rapport à la première partie du boîtier (7), notamment à la pression et aux liquides, sans interrompre l'exploitation de la mesure.

10. Sonde intégrée (4) selon au moins l'une des revendications précédentes, **caractérisée en ce que** le dispositif d'étanchéité (10) est constitué d'un élément d'étanchéité (12), qui peut être raccordé à la première partie du boîtier (7).

11. Sonde intégrée (4) selon la revendication 10, **caractérisée en ce que** l'élément d'étanchéité (12) présente en outre au moins un orifice (13, 16) servant de réception ou de passage pour au moins un insert de mesure (5).

12. Sonde intégrée (4) selon la revendication 11, **caractérisée en ce que** l'orifice (13, 16) pour le logement de l'insert de mesure (5) sert également pour le logement d'une douille (14) existante, notamment en graphite, douille (14) servant à son tour de logement pour au moins un insert de mesure (5).

13. Sonde intégrée (4) selon au moins l'une des revendications précédentes 10 à 12, **caractérisée en ce qu'**une douille de pression (15) est en outre prévue sur l'élément d'étanchéité (12), servant à exercer une pression sur la douille (14) et par conséquent assurer l'étanchéité de la première chambre de sécurité (1) par rapport à la deuxième chambre de sécurité (2), notamment à la pression et aux liquides.

14. Sonde intégrée (4) selon au moins l'une des revendications précédentes 10 à 13, **caractérisée en ce que** l'élément d'étanchéité (12) présente un orifice (13, 16) pour le logement d'un piston de compression (19), piston de compression (19) exerçant une pression sur la douille (14).

15. Sonde intégrée (4) selon au moins l'une des revendications précédentes, **caractérisée en ce qu'**en cas d'une fuite (V) au niveau de la première partie du boîtier (7), le dispositif d'étanchéité (10) assure automatiquement l'étanchéité de la première partie du boîtier (7) par rapport à la deuxième partie du boîtier (29), notamment à la pression et aux liquides.
